**Europäisches Patentamt**

**European Patent Office**

**Office européen des brevets**

(11) Veröffentlichungsnummer: **0 008 320**
A1

(12) # EUROPÄISCHE PATENTANMELDUNG

(21) Anmeldenummer: **79101341.0**

(22) Anmeldetag: **03.05.79**

(51) Int. Cl.³: **C 03 B 9/48**
**C 03 B 9/34, C 03 B 11/06**
**B 22 F 3/14, B 29 C 17/07**
**B 29 C 1/00**

(30) Priorität: **23.08.78 DE 2836828**

(43) Veröffentlichungstag der Anmeldung:
**05.03.80 Patentblatt 80/5**

(84) Benannte Vertragsstaaten:
**AT BE CH FR GB IT NL SE**

(71) Anmelder: **Eichhorn, Helmut**
**Kopernikusring 62**
**D-4030 Ratingen(DE)**

(72) Erfinder: **Eichhorn, Helmut**
**Kopernikusring 62**
**D-4030 Ratingen(DE)**

(54) **Herstellung von Formen.**

(57) Herstellung von Formen für die Glas- und Kunststoffverarbeitung unter Anwendung pulvermetallurgischer Verfahren, insbesondere des isostatischen Pressens.

**EP 0 008 320 A1**

- 1 -

Herstellung von Formen

Die Erfindung betrifft die Anwendung des isostatischen
Pressens pulvermetallurgisch hergestellter Genauteile auf
die Fertigung von Hohlformen oder Formenteilen für die
Glas- und Kunststoffindustrie.

Formen für die Glas- und Kunststoffindustrie werden
spangebend hergestellt und zur Herabsetzung des
Verschleißes gepanzert.

Es ist vorgeschlagen worden, poröses Eisen wegen seines
besonderen Wärmeleitfähigkeitsverhaltens als Material für
Gußformen zu verwenden (Kieffer/Hotop, Sintereisen und
Sinterstahl, 1948, Seite 375).
Nach US 31 86 818 und DE-AS 10 78 291 können Formen im
drucklosen Schüttverfahren hergestellt werden.
Aus DE-AS 22 36 383 ist die Herstellung von Sinterteilen
mit Innengewinde bekannt. Dabei wird Pulver isostatisch
fertigverdichtet und gesintert. Das Sinterteil kann mit
einem Kalibrierdorn isostatisch nachverdichtet werden.
Hierdurch lassen sich gesinterte Genauteile herstellen.

Zur Verbesserung der Eigenschaften ist das Aufkohlen von
Sinterkörpern, die Verwendung von vorlegierten
Stahlpulvern und die Zugabe von Legierungselementen zum
Pulver beschrieben. Es ist ferner bekannt, durch
Oberflächenbehandlung eine Erhöhung des Widerstandes gegen Verschleiß zu erzielen (Eisenkolb, Fortschritte der Pulvermetallurgie, Band II, 1963, Seiten 167, 170, 171).

Durch die Erfindung wird die Fertigung von Formen für die Glas- und Kunststoffindustrie vereinfacht.

Dazu wird ein Werkzeug mit bekanntem Aufbau verwendet, mit dem der für die Formung des Glases oder Kunststoffes erforderliche Hohlraum durch isostatisches Pressen von Pulver auf einen Dorn erzeugt wird.
Die Formen können nach dem Sintern in bekannter Weise auf genaues Maß gebracht werden.
Durch die Wahl des Pulvers und der Nachbehandlung können die Eigenschaften der Formen beeinflußt werden.
Die nach diesem Verfahren hergestellten Formen umschließen den für die Formung des Glases oder Kunststoffes vorgesehenen Hohlraum ganz oder teilweise und können Teile von Formen sein.

Da der Dorn für die Erzeugung des Formenhohlraumes bei geeignetem Werkstoff keinem Verschleiß unterliegt, bestehen die mit der Erfindung erzielten Vorteile insbesondere darin, daß eine unbegrenzte Anzahl von Formen zu verschiedenen Zeiten gepreßt werden kann und die so gefertigten Formen mit geringen Abweichungen gleich sind.

Der technische Fortschritt bei der Fertigung von Glas- und Kunststoff-Formen nach pulvermetallurgischen Verfahren ist vor allem darin zu sehen, daß beim isostatischen Pressen mit geringem technischen Aufwand und niedrigen Kosten die vorgegebenen Maße des Formenhohlraumes in engen Grenzen eingehalten werden und im Vergleich zur spangebenden Formung der Rohstoffverbrauch und Energieaufwand niedriger werden (VDI-Bericht Nr. 277, 1977, Optimale Rohstoff- und Energienutzung bei Verwendung von Sinterteilen).

Patentansprüche:

1. Anwendung des isostatischen Pressens pulvermetallurgisch hergestellter Genauteile auf die Fertigung von Hohlformen für die Glas- und Kunststoffindustrie.

2. Verwendung von aushärtbaren Pulverzusammensetzungen für den Zweck nach Anspruch 1.

0008320

Europäisches Patentamt

**EUROPÄISCHER RECHERCHENBERICHT**

Nummer der Anmeldung

EP 79 10 1341

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | GB - A - 1 284 522 (PRESSURE DYNAMICS) <br> * Das ganze Dokument * | 1,2 |
| X | FR - A - 1 302 220 (TOKYO SHIBAURA DENKI KABUSHIKI KAISHA) <br> * Das ganze Dokument * | 1,2 |
| A | US - A - 3 254 981 (HAVENS) <br> * Spalte 3, Zeilen 12-66 * | 1,2 |

**KLASSIFIKATION DER ANMELDUNG (Int.Cl. 3)**

C 03 B 9/48
C 03 B 9/34
C 03 B 11/06
B 22 F 3/14
B 29 C 17/07
B 29 C 1/00

**RECHERCHIERTE SACHGEBIETE (Int. Cl. 3)**

C 03 B

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 02-10-1979 | V.D. BOSSCHE |

EPA form 1503.1 06.78